# EUROPEAN PATENT SPECIFICATION

(11) **EP 2 846 619 B1**
(45) Date of publication and mention of the grant of the patent: **29.11.2017**
(21) Application number: 13788329.4
(22) Date of filing: 06.05.2013
(51) Int. Cl.: A01B 61/04, A01B 63/14, A01B 49/00, A01B 63/111

(54) **AN AGRICULTURAL MACHINE PROVIDED WITH A FORCE REGULATION DEVICE, A METHOD FOR CONTROLLING A PROCESSING DEPTH AND A FORCE REGULATION DEVICE**
MIT EINER KRAFTREGULIERUNGSVORRICHTUNG AUSGERÜSTETE LANDWIRTSCHAFTLICHE MASCHINE, VERFAHREN ZUR STEUERUNG EINER VERARBEITUNGSTIEFE UND KRAFTREGULIERUNGSVORRICHTUNG
MACHINE AGRICOLE COMPORTANT UN DISPOSITIF DE RÉGULATION DE FORCE, PROCÉDÉ DE COMMANDE D'UNE PROFONDEUR DE TRAITEMENT ET DE DISPOSITIF DE RÉGULATION DE FORCE

(30) Priority: 11.05.2012 SE 1250484
(43) Date of publication of application: 18.03.2015
(73) Proprietor: Väderstad Holding AB, 590 21 Väderstad (SE)
(72) Inventor: KARLSSON, Johan, S-590 76 Vreta Kloster (SE)
(74) Representative: Groth & Co. KB
(86) International application number: PCT/SE2013/050502
(87) International publication number: WO 2013/169188

(56) References cited:
- EP-A2- 1 398 253
- WO-A1-2012/041743
- CA-A1- 2 549 371
- US-A- 2 469 622
- US-A- 2 755 722
- US-A- 2 919 754
- US-A- 3 732 932
- US-A1- 2006 282 205

## Description

### Technical Field

The present invention relates to agricultural machines and the loads the same are subjected to during turning. In addition, the invention relates to agricultural machines that are towed by a tractor.

### Background of the Invention

The background of the invention is the forces that occur when an agricultural machine is to turn around obstacles. On these occasions, a higher power output is required from the machine during the turn. Such a higher power output originates from the lateral forces that act on the agricultural machine through its cultivating implement, for instance a pre-implement. Since the pre-implement of certain agricultural machines processes deeply and by rigid tines, laterally, the pre-implement and other structure of the machine will be affected by very high loads when an operator turns the machine, e.g. to round a well on the field. These forces represent, among other things, a greater force load on the cultivating implement of the agricultural machine and also on the supporting structure of the machine but also mean a higher fuel consumption of the machine. Such lateral forces on implement and supporting structures are undesired.

These forces have previously been controlled by increasing the dimensions of the parts that should carry the forces. However, the fuel consumption is still relatively high by heavier supporting parts.

### The Object of the Invention

The object of the present invention is to provide an agricultural machine wherein the problems indicated above have been solved.

The object is furthermore to provide an agricultural machine that has the possibility to adapt the lateral forces on the processing implements.

A further object is to provide a force regulation device for an agricultural machine, which force regulation device allows an adaptation of the lateral forces during turning.

In addition, the object of the invention is to provide a method for controlling the processing depth of a cultivation device of an agricultural machine.

### Summary of the Invention

By the present invention, as the same appears in the independent claims, the above-mentioned objects are met, said disadvantages having been eliminated. Suitable embodiments of the invention are defined in the dependent claims.

According to the invention, a solution of the problems is that a regulation system is arranged to adapt the processing depth of the cultivating implements of the agricultural machine depending on how much the operator turns alternatively how large the lateral loading is on the pre-implement. This means that the machine will be more manoeuvrable and that the structure of the machine is spared, which in turn may lead to lower standard cost of the machine since it does not need to be dimensioned for unnecessary high loads. By LS hydraulics, there are good possibilities for such a system.

According to a first embodiment of the invention in a tractor-driven agricultural implement, the tractor driver sets the desired processing depth of the pre-implement, and as long as he is driving straight on, said depth will be kept. If he turns the tractor, it is a sensor, which either is a position sensor or a rangefinder, which senses the angular change between the tractor and the drawbar of the machine. This change of the angle is used as an input value for how the regulation system should adapt the processing depth of the pre-implement.

According to a second embodiment of the invention in a tractor-driven agricultural implement, the tractor driver sets the desired processing depth of the pre-implement, and as long as the stress levels, in, e.g., the drawbar or in one of the cultivating implements upon lateral load, are within given levels, the processing depth will be retained. The stress levels are measured by strain gauges placed on a suitable place, on/at the drawbar or on/at the implements. In case the stress levels rise, the regulation system should adapt the processing depth so that the stress levels are kept below a given level. The level of the stress may to a certain extent be adjustable, with a given maximum value, so that the tractor driver himself can regulate the sensitivity of the system, i.e., how fast and how much the pre-implement is raised upon increased lateral loading.

The invention concerns an agricultural machine provided with cultivation devices, which are mounted on a vertically adjustable support arm or support frame of a chassis of the agricultural machine. Via the support arm thereof, said devices are arranged to at least assume a working depth at which said devices process the ground at a preselected working depth. The agricultural machine is furthermore provided with a force regulation device comprising a lateral force sensor connected to a control system, which in turn is connected to a hydraulic system, which is connected to at least one lifting device, for instance a hydraulic cylinder, which is arranged to regulate the working depth of the cultivation device depending on a control signal from the lateral force sensor. The regulation of the working depth may take place in several different ways, for instance by the vertical position of the cultivation device being altered in relation to the chassis of the agricultural machine. Alternatively, the vertical position of supporting wheels or carrying wheels of the machine may be changed in order to thereby change the vertical position of the cultivation device in relation to the ground surface. Furthermore, the entire chassis of the agricultural machine may, by the suspension thereof in a traction vehicle, be positionally changed in order to thereby change the vertical position of the cultivation device in relation to the ground surface. Particularly, it is upon turns of the agricultural machine, irrespective of whether the agricultural machine is towed, carried or self-propelled, these lateral forces occur. Thus, the invention is based on some form of sensor registering either a turn or the forces directly. In a towed agricultural machine, in addition there may be arranged a sensor that registers the turn of the proper traction vehicle such as steering wheel deflection or wheel alignment, the signal of which sensor then is correlated with an adjustment signal for the hydraulics for the adaptation of the working depth.

Even if a hydraulic system is indicated for this adaptation of the working depth, also electrical or pneumatic systems for said adaptation may be alternatives.

In one embodiment of the invention, the lifting device is connected between the support arm and a chassis of the agricultural machine and thereby arranged to affect said working depth depending on an input control signal to the control system from the lateral force sensor, which relates selectively to the lateral force that acts on the cultivation device.

In one embodiment of the invention, the control signal of the lateral force sensor depends on the angle between a traction vehicle and a drawbar of the agricultural machine. Thus, a control signal is obtained from an angle sensor, which control signal then is correlated with an adjustment signal for the hydraulics for the adaptation of the working depth. This embodiment entails a simple and protected installation of the angle sensor at the connection between traction vehicle and agricultural machine since the motions occur exactly there.

In one embodiment of the invention, a position sensor or a rangefinder is arranged to detect the angular change of said angle and to create said control signal. The embodiment indicates different types of signal sensors.

In one embodiment of the invention, the control signal of the lateral force sensor is generated by a strain gauge placed on the agricultural machine. This embodiment uses sensors that directly react to a direct action against some part of the agricultural machine, the signal of the sensor being directly proportional to the magnitude of the lateral force.

In one embodiment of the invention, the strain gauge is placed on the drawbar of the agricultural machine. The placement of the strain gauge is selected so that the action thereof becomes sufficiently large without the placement entailing that the sensor is subjected to unallowed mechanical action by the use of the agricultural machine.

In one embodiment of the invention, the strain gauge is placed on or in close connection with the cultivation device. This placement of the sensor gives maximum deflection but still the placement is sufficiently protected from mechanical stress by the use of the agricultural machine.

The invention also concerns a method for controlling the processing depth of a cultivation device of an agricultural machine. In this control, a direct action on a lateral force sensor of the cultivation device contributes to produce an adjustment signal for the actuation of a lifting device, for instance a hydraulic system. The lifting device regulates in turn the processing depth of the cultivation device depending on the magnitude of said adjustment signal. The invention expresses this method more in general to provide a lateral force adjustment of the working depth of an agricultural implement.

In one embodiment of the invention, the adjustment signal is determined by a control signal from a lateral force sensor being compared in a control system with threshold values of lateral forces, where the adjustment signal represents said lateral forces.

Furthermore, the invention also concerns a force regulation device comprising sensors connected to a control system co-operating with a hydraulic system. The sensors are mounted on an agricultural machine provided with a cultivation device in such a way that the control signals of the sensors depend on lateral forces on the cultivation devices of the agricultural machine, and that the hydraulic system is controlled by the control signals so as to, via hydraulic cylinders, adapt the working depth of the cultivation devices of the agricultural machine. The sensors of such a force regulation device may be of the type described above.

In one embodiment of the invention, the sensors are placed either on a drawbar of the agricultural machine or on the cultivation devices.

### Brief Description of the Drawings

Now, the invention will be described in more detail with references in connection with the accompanying drawing figures. The drawing figures show only explanatory sketches intended to facilitate the understanding of the invention.
- Figure 1a: schematically shows a view from above of an agricultural machine according to a first embodiment of the invention.
- Figure 1b: shows a part view from the side of two implements for an agricultural machine according to Figure 1a.
- Figure 2a: schematically shows an embodiment according to Figure 1a during turning of the agricultural machine.
- Figure 2b: shows a part view from the side of two implements for an agricultural machine according to Figure 2a.
- Figure 3: shows a side view of an agricultural machine according to a second embodiment of the invention.

### Description of the Invention

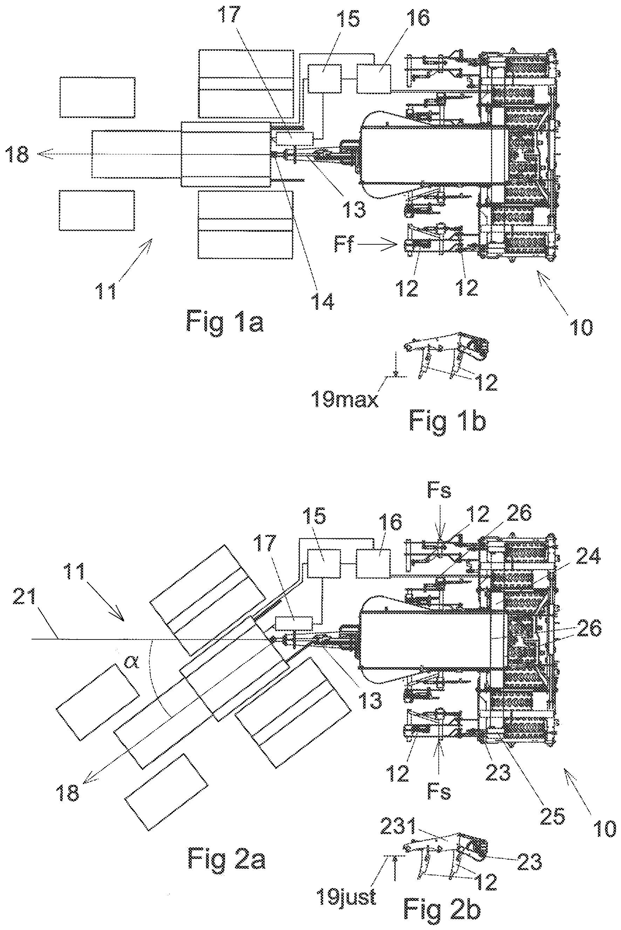

Figure 1a shows an agricultural machine 10 towed by a tractor 11. The agricultural machine is provided with a plurality of cultivating implements 12 or cultivation devices such as tines, discs, shares, etc., two implements of which are shown from the side in a part view in Figure 1b. The agricultural machine 10 is provided with a drawbar 13, which is connected to a hitch 14 of the tractor 11. The figure also shows that the tractor or the agricultural machine is provided with a control system 15 and a hydraulic system 16. To the control system 15, a lateral force sensor 17 in the form of an angle sensor is connected. This angle sensor senses the angle between the drawbar 13 and the direction of travel 18 of the tractor. In the figure, said angle α=0° by the fact that the tractor tows the agricultural machine straight on. The front forces Ff acting on the implements 12 are essentially directed rearward straight toward the implements, which means that the deeper the implements work, the higher the acting forces, Ff, become. When driving straight forward, the working tools are set for operation at their maximal working depth 19max according to Figure 1b.

Figure 2a shows the same constellation of agricultural machine 10 and tractor 11 as in Figure 1a. In this figure, however, the tractor turns so that its direction of travel 18 deviates from the towing direction 21 of the drawbar 13 of the agricultural machine. In the figure shown, said angle α is approx. 40° and this is to be considered as a maximum angle during turning when the agricultural machine is towed by a tractor. By the fact that the agricultural machine and the implement 12 thereof by such a turn partly are rotated in relation to the ground, this rotation produces lateral forces Fs on the implements 12. Said lateral forces Fs affect on one hand the implements 12 and on the other hand the suspension 23 of the implements and the support arm 231 thereof, see Figure 2b, as well as the attachment of the suspension 23 in the chassis 24 of the agricultural machine 10. Since the number of implements 12 of such an agricultural machine is considerable, in the present case 12 but may be up to 50 or more, these lateral forces will become significant. Upon such a turn with the tractor and carriage, the lateral force sensor/angle sensor will continuously or intermittently send control signals to the control system 15, which control signals are interpreted to correspond to certain levels of the magnitude of the lateral forces Fs. The magnitude of the lateral forces Fs is compared with stored values in the control system 15, either according to continuous tables or according to tables of the interval type.

In continuous tables, each degree of angular change corresponds to a certain lateral force, which is represented by a control signal that is compared with stored signal levels, which give rise to an adjustment signal that is sent to the hydraulic system 16. In this connection, the hydraulic system will decrease the working depth 19 of the implement to an adjusted working depth 19 just depending on the magnitude of the adjustment signal. Thus, each angle corresponds to a specific adjustment signal that corresponds to a certain working depth of the implements 12.

In tables of the interval type, the adjustment signal will assume a certain value when the angle exceeds a certain predetermined value, for instance 10°, and an adjustment signal is sent to the hydraulic system, which adapts the working depth to "the 10° depth". After that, this working depth is maintained until the angle exceeds 20°, at which a new adjustment signal is sent to the hydraulic system that adapts the working depth to "the 20° depth", and so on. The intervals of the angles may be determined to other values than 10°, 20°, 30°, 40°, for instance 15°, 25°, 35°.

The hydraulic system 16 actuates hydraulic cylinders 25 to lift and lower, respectively, the implements 12 by hydraulic fluid through hydraulic pipes 26 to and from the hydraulic cylinders 25. As furthermore is seen in Figures 1a and 2a, the control system 15, the hydraulic system 16, and the lateral force sensor 17, in the embodiment of an angle sensor shown now, are connected to the tractor via feed lines for their respective electricity supply.

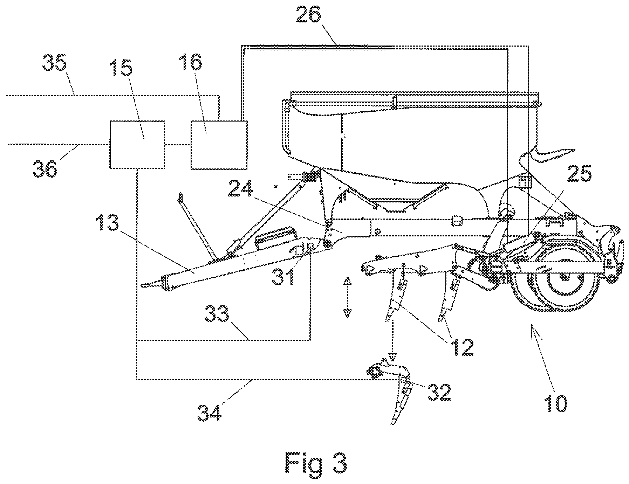

Figure 3 shows a second embodiment of an agricultural machine 10 shown from the side and arranged to be connected to a drawbar of a tractor correspondingly as shown in previous figures. To the agricultural machine 10 there are connected a control system 15 and a hydraulic system 16 for, via hydraulic pipes 26, actuating hydraulic cylinders 25 to lift and lower, respectively, implements 12 connected to the agricultural machine. Correspondingly as accounted for above, the agricultural machine is provided with lateral force sensors 31, 32 in the form of strain gauges to calculate, by the control system, which lateral forces that act on the implements during turning of the agricultural machine.

One embodiment of the use of strain gauge as lateral force sensor 31 is that this/these is/are placed somewhere on the drawbar 13, preferably at the attachment of the drawbar to the chassis 24 of the agricultural machine, to register strains in the drawbar when this is subjected to a bending moment when the agricultural machine turns. The control signal that is generated by the strain gauge 31 is sent to the control unit 15 via a first signal line 33.

An alternative embodiment of the use of a lateral force sensor 32 in the form of a strain gauge is that this/these is/are placed on the working means, i.e., the implement 12, preferably at the upper part thereof where the bending moment will be the greatest, to register strains in the implement when this is subjected to a bending moment when the agricultural machine turns. The control signal that is generated by the strain gauge is sent to the control unit 15 via a second signal line 34. This is shown in the separate figure of Figure 3, where a working tool has been moved out from its holder according to the arrow.

The generated control signals from the lateral force sensors 31, 32, i.e., the strain gauges, are processed in the control unit 15 to represent an adjustment signal that is proportional to the lateral forces and considering these, send said adjustment signal to the hydraulic system 16 so as to, by means of the hydraulic cylinders 25, lower or raise the implements 12 to the level that corresponds to the adjustment signal according to the double arrow shown.

The control system 15 and the hydraulic system 16 are driven via feed lines 35, 36 from a traction vehicle/tractor.

This second embodiment is also suitable for self-propelled agricultural machines, i.e., which are not towed by a tractor or the like.

As lateral force sensor/sensors, also other devices than those shown in the embodiment examples may be applicable.

The described lateral force measurement on the implements of an agricultural machine may also be combined with longitudinal force measurement on the implements for correcting the working depth of the implements.

The signal processing takes place as previously described, i.e., that an electric control signal that represents the lateral forces is translated to an adjustment signal for the correction of the working depth of the implements/working means according to previously described and predetermined tables.

Furthermore, a plurality of strain gauges having different placements on the parts of the agricultural machine may be combined to represent an adjustment signal for the correction of the working depth.

## Claims

1. Agricultural machine (10) provided with cultivation devices (12), which are mounted on a vertically adjustable support arm (231) or support frame of a chassis (24), said devices (12), via the support arm (231), thereof being arranged to at least assume a working depth (19) at which said devices (12) process the ground at a preselected working depth, **characterized in that** the agricultural machine (10) is provided with a force regulation device comprising a lateral force sensor (17, 31, 32) connected to a control system (15), which in turn is connected to a hydraulic system (16), which is connected to at least one lifting device (25), for instance a hydraulic cylinder, which is arranged to regulate the working depth of the cultivation device (12) when the agricultural machine turns depending on a control signal from the lateral force sensor (17, 31, 32), which registers either a turn of the agricultural machine or directly the lateral forces on the cultivation device so that the cultivation device is raised upon increased lateral loading.

2. Agricultural machine according to claim 1, **characterized in that** the lifting device (25) is connected between the support arm (231) and a chassis (24) of the agricultural machine (10) and thereby arranged to affect said working depth (19) depending on an input control signal to the control system (15) from the lateral force sensor (17, 31, 32), which relates selectively to the lateral force (Fs) that acts on the cultivation device (12).

3. Agricultural machine according to any one of claims 1-2, **characterized in that** the control signal of the lateral force sensor (17) depends on the angle (α) between a traction vehicle (11) and a drawbar (13) of the agricultural machine (10).

4. Agricultural machine according to claim 3, **characterized in that** a position sensor or a rangefinder is arranged to detect the angular change of said angle (α) and to create said control signal.

5. Agricultural machine according to any one of claims 1-4, **characterized in that** the control signal of the lateral force sensor (31, 32) is generated by a strain gauge placed on the agricultural machine (10).

6. Agricultural machine according to claim 5, **characterized in that** the strain gauge is placed on the drawbar (13) of the agricultural machine (10).

7. Agricultural machine according to any one of claims 5-6, **characterized in that** the strain gauge is placed on or in close connection with the cultivation device (12).

8. Method for controlling the processing depth of a cultivation device of an agricultural machine, **characterized in that** a direct action on a lateral force sensor (17, 31, 32) of the cultivation device (12) produces an adjustment signal for the actuation of a lifting device, for instance a hydraulic system (16), which in turn regulates the processing depth (19) of the cultivation device (12) depending on the magnitude of said adjustment signal.

9. Method according to claim 8, **characterized in that** the adjustment signal is determined by a control signal from a lateral force sensor (17, 31, 32) being compared in a control system (15) with threshold values of lateral forces (Fs), where the adjustment signal represents said lateral forces.

10. Force regulation device comprising sensors (17, 31, 32) connected to a control system (15) co-operating with a hydraulic system (16), **characterized in that** the sensors are mounted on an agricultural machine (10) provided with cultivation devices (12) in such a way that the control signals of the sensors depend on lateral forces (Fs) on the cultivation devices (12) of the agricultural machine (10), and that the hydraulic system (16) is controlled by the control signals so as to, via hydraulic cylinders (25), adapt the working depth of the cultivation devices (12) of the agricultural machine (10).

11. Force regulation device according to claim 10, **characterized in that** the sensors (17, 31, 32) are placed either on a drawbar (13) of the agricultural machine or on the cultivation devices (12).

## Patentansprüche

1. Landwirtschaftsmaschine (10), die mit Bodenbearbeitungsvorrichtungen (12) versehen ist, die an einem vertikal einstellbaren Tragarm (231) oder einem Tragrahmen eines Fahrgestells (24) montiert sind, wobei die Vorrichtungen (12) über den Tragarm (231) angeordnet sind, um zumindest eine Arbeitstiefe (19), bei der die Vorrichtungen (12) den Boden bei einer vorgewählten Arbeitstiefe bearbeiten, anzunehmen, **dadurch gekennzeichnet, dass** die Landwirtschaftsmaschine (10) mit einer Kraftregulierungsvorrichtung versehen ist, die einen Sensor (17, 31, 32) für seitliche Kräfte umfasst, der mit einem Steuersystem (15) verbunden ist, das wiederum mit einem Hydrauliksystem (16) verbunden ist, das mit mindestens einer Hebevorrichtung (25), beispielsweise einem hydraulischen Zylinder verbunden ist, der angeordnet ist, um die Arbeitstiefe der Bodenbearbeitungsvorrichtungen (12) zu regulieren, wenn die Landwirtschaftsmaschine in Abhängigkeit von einem Steuersignal von dem Sensor (17, 31, 32) für seitliche Kräfte, der entweder eine Wendung der Landwirtschaftsmaschine oder direkt die seitlichen Kräfte auf die Bodenbearbeitungsvorrichtung erfasst, wendet, so dass die Bodenbearbeitungsvorrichtung bei erhöhter seitlicher Belastung hochgehoben wird.

2. Landwirtschaftsmaschine nach Anspruch 1, **dadurch gekennzeichnet, dass** die Hebevorrichtung (25) zwischen dem Tragarm (231) und einem Fahrgestell (24) der Landwirtschaftsmaschine (10) verbunden ist und dadurch angeordnet ist, um die Arbeitstiefe (19) in Abhängigkeit von einem Eingangssteuersignal von dem Sensor (17, 31, 32) für seitliche Kräfte, der sich selektiv auf die seitliche Kraft (Fs) bezieht, die auf die Bodenbearbeitungsvorrichtung wirkt, in das Steuersystem (15) zu beeinflussen.

3. Landwirtschaftsmaschine nach einem der Ansprüche 1-2, **dadurch gekennzeichnet, dass** das Steuersignal des Sensors (17) für seitliche Kräfte von dem Winkel (α) zwischen einem Zugfahrzeug (11) und einer Deichsel (13) der Landwirtschaftsmaschine (10) abhängig ist.

4. Landwirtschaftsmaschine nach Anspruch 3, **dadurch gekennzeichnet, dass** ein Positionssensor oder ein Entfernungsmesser angeordnet ist, um die Winkeländerung des Winkels (α) zu detektieren und um das Steuersignal zu erzeugen.

5. Landwirtschaftsmaschine nach einem der Ansprüche 1-4, **dadurch gekennzeichnet, dass** das Steuersignal des Sensors (31, 32) für seitliche Kräfte durch einen Dehnungsmesser erzeugt wird, der auf der Landwirtschaftsmaschine (10) positioniert ist.

6. Landwirtschaftsmaschine nach Anspruch 5, **dadurch gekennzeichnet, dass** der Dehnungsmesser auf der Deichsel (13) der Landwirtschaftsmaschine (10) positioniert ist.

7. Landwirtschaftsmaschine nach einem der Ansprüche 5-6 **dadurch gekennzeichnet, dass** der Dehnungsmesser auf oder in enger Verbindung mit der Bodenbearbeitungsvorrichtung (12) positioniert ist.

8. Verfahren zum Steuern der Bearbeitungstiefe einer Bodenbearbeitungsvorrichtung einer Landwirtschaftsmaschine, **dadurch gekennzeichnet, dass** eine direkte Wirkung auf einen Sensor (17, 31, 32) für seitliche Kräfte der Bodenbearbeitungsvorrichtung (12) ein Einstellsignal für die Betätigung einer Hebevorrichtung, beispielsweise einem Hydrauliksystem (16), erzeugt, das wiederum die Bearbeitungstiefe (19) der Bodenbearbeitungsvorrichtung (12) in Abhängigkeit von der Größe des Einstellsignals reguliert.

9. Verfahren nach Anspruch 8, **dadurch gekennzeichnet, dass** das Einstellsignal durch ein Steuersignal von einem Sensor (17, 31, 32) für seitliche Kräfte bestimmt wird, indem es in einem Steuersystem (15) mit Schwellenwerten von seitlichen Kräften (Fs) verglichen wird, wobei das Einstellsignal die seitlichen Kräfte darstellt.

10. Kraftregulierungsvorrichtung, die Sensoren (17, 31, 32) umfasst, die mit einem Steuersystem (15) verbunden sind, das mit einem Hydrauliksystem (16) zusammenwirkt, **dadurch gekennzeichnet, dass** die Sensoren auf einer Landwirtschaftsmaschine (10) montiert sind, die derart mit Bodenbearbeitungsvorrichtungen (12) versehen ist, dass die Steuersignale der Sensoren von seitlichen Kräften (Fs) auf die Bodenbearbeitungsvorrichtungen (12) der Landwirtschaftsmaschine (10) abhängig sind, und dass das Hydrauliksystem (16) durch die Steuersignale gesteuert wird, um über hydraulische Zylinder (25) die Arbeitstiefe der Bodenbearbeitungsvorrichtungen (12) der Landwirtschaftsmaschine (10) anzupassen.

11. Kraftregulierungsvorrichtung nach Anspruch 10, **dadurch gekennzeichnet, dass** die Sensoren (17, 31, 32) entweder auf einer Deichsel (13) der Landwirtschaftsmaschine (10) oder auf den Bodenbearbeitungsvorrichtungen (12) positioniert sind.

## Revendications

1. Machine agricole (10) équipée de dispositifs de culture (12), qui sont montés sur un bras de support réglable verticalement (231) ou un cadre de support d'un châssis (24), lesdits dispositifs (12), par l'intermédiaire du bras de support (231), de celle-ci étant agencés de manière à adopter au moins une profondeur de travail (19) à laquelle lesdits dispositifs (12) travaillent la terre à une profondeur de travail présélectionnée, **caractérisée en ce que** la machine agricole (10) est équipée d'un dispositif de régulation de force comprenant un capteur de force latérale (17, 31, 32) connecté à un système de commande (15), qui est à son tour connecté à un système hydraulique (16), qui est connecté à au moins un dispositif d'élévation (25), par exemple un cylindre hydraulique, qui est agencé de manière à réguler la profondeur de travail du dispositif de culture (12) lorsque la machine agricole tourne en fonction d'un signal de commande en provenance du capteur de force latérale (17, 31, 32), qui enregistre soit un virage de la machine agricole soit directement les forces latérales sur le dispositif de culture de telle sorte que le dispositif de culture soit élevé en cas de charge latérale accrue.

2. Machine agricole selon la revendication 1, **caractérisée en ce que** le dispositif d'élévation (25) est connecté entre le bras de support (231) et un châssis (24) de la machine agricole (10) et est de ce fait agencé de manière à affecter ladite profondeur de travail (19) en fonction d'un signal de commande d'entrée au système de commande (15) en provenance du capteur de force latérale (17, 31, 32), qui est relatif à la force latérale (Fs) qui agit sur le dispositif de culture (12).

3. Machine agricole selon l'une quelconque des revendications 1 à 2, **caractérisée en ce que** le signal de commande du capteur de force latérale (17) dépend de l'angle (α) entre un véhicule de traction (11) et une barre d'attelage (13) de la machine agricole (10).

4. Machine agricole selon la revendication 3, **caractérisée en ce qu'**un capteur de position ou un télémètre est agencé de manière à détecter la variation angulaire dudit angle (α) et à créer ledit signal de commande.

5. Machine agricole selon l'une quelconque des revendications 1 à 4, **caractérisée en ce que** le signal de commande du capteur de force latérale (31, 32) est généré par une jauge de contrainte qui est placée sur la machine agricole (10).

6. Machine agricole selon la revendication 5, **caractérisée en ce que** la jauge de contrainte est placée sur la barre d'attelage (13) de la machine agricole (10).

7. Machine agricole selon l'une quelconque des revendications 5 à 6, **caractérisée en ce que** la jauge de contrainte est placée sur ou en étroite connexion avec le dispositif de culture (12).

8. Procédé de commande de la profondeur de traitement d'un dispositif de culture d'une machine agricole, **caractérisé en ce qu'**une action directe sur un capteur de force latérale (17, 31, 32) du dispositif de culture (12) produit un signal de réglage pour actionner un dispositif d'élévation, par exemple un système hydraulique (16), qui régule à son tour la profondeur de traitement (19) du dispositif de culture (12) en fonction de la grandeur dudit signal de réglage.

9. Procédé selon la revendication 8, **caractérisé en ce que** le signal de réglage est déterminé par un signal de commande envoyé par un capteur de force latérale (17, 31, 32) qui est comparé dans un système de commande (15) avec des valeurs de seuil de force latérale (Fs), dans lequel le signal de réglage représente lesdites forces latérales.

10. Dispositif de régulation de force comprenant des capteurs (17, 31, 32) connectés à un système de commande (15) qui coopère avec un système hydraulique (16), **caractérisé en ce que** les capteurs sont montés sur une machine agricole (10) équipée de dispositifs de culture (12) de telle sorte que les signaux de commande des capteurs dépendent des forces latérales (Fs) sur les dispositifs de culture (12) de la machine agricole (10), et **en ce que** le système hydraulique (16) est commandé par les signaux de commande de manière, par l'intermédiaire de cylindres hydrauliques (25), à adapter la profondeur de travail des dispositifs de culture (12) de la machine agricole (10).

11. Dispositif de régulation de force selon la revendication 10, **caractérisé en ce que** les capteurs (17, 31, 32) sont placés soit sur une barre d'attelage (13) de la machine agricole, soit sur les dispositifs de culture (12).
